# EUROPEAN PATENT APPLICATION

(11) **EP 1 523 883 A1**
(43) Date of publication of application: **20.04.2005**
(21) Application number: 03023385.2
(22) Date of filing: 16.10.2003
(51) Int. Cl.: A01K 3/00, H01B 5/00

(54) **Electronic fence**

(71) Applicant: Linuzons Bil & Försäljnings AB, 51156 KINNA (SE)
(72) Inventor: Lindstrand, Ulf, 662 95 Fengersfors (SE)

(57) **Abstract**

An electric fence (1) comprising at least one elongate support member (5) comprising an electrically non-conductive material and at least one elongate conductor (4) supported by said support member. Said support member has higher flexural strength than said conductor. The invention also relates to a method of providing an electric fence.

## Description

### Field of invention

This invention relates to an electric fence comprising at least one elongate support member comprising an electrically non-conductive material and at least one elongate conductor supported by said support member. The invention also relatates to a method of providing an electric fence.

### Background of the invention

Electric fences are commonly used by farmers and animal breeders to enclose animals such as horses and cattle. These fences commonly have conductive wires strung between fence posts, but are henceforth not necessarily considered to comprise posts. To deter the animals from escaping, the wires are electrified to create an electrical potential between two parallell wires or between the wires and the ground. When an animal gets in contact with the electrified wire, a current path is created from the electrified wire, through the animal, and to the ground. Similarly, if the electric fence uses two or more wires a current path is created from an electrified wire, through the animal and to the ground. This current flow shocks the animal and causes unpleasant sensation that typically causes the animal to avoid the fence. The severity of the shock can be controlled by changing the voltage and the current supplied to the conductive wires.

In order to achieve increased visibility and durability for the electric fence wires it is common to arrange the wires to some kind of support structure, for example a strong polymer rope or woven polymer threads, such as for example the electric fence line described in US 5,036,166.

There is however also a need for a secure maintaining of the functionality of the electric fence. Rain- or snowfall can cause moisture between conducting wires and can consequently cause leakage currents, diminishing the efficiency of the electric fence. Another problem is that the polymer rope or weave may get twisted and that spark formation occur when the conductive wires get too close to each other. This spark formation reduces the life time of the conductive wires.

By using a more rigid support structure for supporting the conductive wires, such as a stiff plastic profile board as shown in US 5,992,828, this problem may be overcome. Using a plastic board also improves the visibility in comparison with rope- or weave supported conductive wires. Increased visibility is important in order to avoid accidental contact between animals or humans. The electric fence suggested in US 5,992,828 is however being manufactured and delivered in straight modules, which demands more complicated transportation and mounting compared to conventional rope or tape fences that can be winded up on coils.

Conventional electric fences have several important disadvantages in common. For enclosing or confining certain forms of livestock, such as thoroughbred race horses or animals of similar value, the safety of the animals is of special concern. It is not uncommon that a valuable race horse gets badly hurt after having run into an electric fence. Once shocked, the freightened horse are often unable to determine the source of the schock and may flee into the fence thereby risking to get trapped. In this situation, being subjected to the shocks from the constant electric current the horse desperately tries to break free, thereby getting very badly cut in muscles and ligaments by the sharp electrified wire or by the twisted polymer tape or rope.

### Summary of the invention

An object of the invention is to alleviate at least some of the drawbacks mentioned above by providing an improved electric fence.

Another object of the invention is to provide an improved method for producing an electric fence in such a manner that at least some of the above drawbacks are alleviated.

These and other objects, which will appear from the following description, have now been achieved by an electric fence and a method having the features defined in the independent claims. Preferred embodiments are recited in the subclaims.

The invention is based on the understanding that animals can be saved from unnecessary injuries and pain by allowing a conductor to break, snap or disintegrate when subjected to a certain magnitude of force. In particular, the invention is based on the understanding that the conductor can be supported by a support member which preferably is visible to the animal, the conductor being less pressure or force resistant than the support member.

By applying an elongate support member that has a higher flexural strength than the conductor, the electric fence can be remarkably safer for the confined animals. Serious injurys and great pain caused by cutting metal wire can be avoided. Destruction of valuable animals can be avoided.

Since the elongate support member has a higher flexural strength than the conductor, the conductor breaks before the elongate support member in case of a violent collision between an animal and the electric fence. It should be noted that for the breakability of the conductor it does not matter where along its extension the collision takes place. First when the conductor has broken does the current flow cease and the animal does no longer receive any shocks. There is no risk that the animal gets trapped in an electrified metal wire causing great injury when the stressed animal struggles to break free.

There has previously been little effort to address the above mentioned drawbacks. In fact, most conventional electric fences strive to achieve an electric fence that is as durable as possible, for example by using high-strength metal strands such as stainless steel as is suggested in US 5,036,166. As is discussed in US 6,513,793, it seems as if the central issue when developing an electric fence with an electrically conducting metal wire is how to achieve an electric fence with a metal wire that has both good electrical conductivity and strong mechanical properties in order to withstand the weight and force of a heavy animal running into it. No attention is being paid to the safety of the animals.

According to an embodiment of the invention the support member has a lateral extension length before breakage more than twice the size of the lateral extension length before breakage of the conductor. This is one preferred relationship between the flexural strengths of the conductor and the support member, but it is also possible to provide a conductor with a lateral extension length before breakage being only 10-100% the length for the support member and still maintain the functionality of the invention. However the safety increases with an increasing difference.

According to other embodiments of the invention the conductor is provided with weakened portions. and indications of fracture respectively. Weakened portions can be achieved by altering the mechanical properties of the material in portions of the conductor, or by arranging indications of fracture. Indications of fracture may be visible indents in the conductor. The purpose of the weakened portions and the indications of fracture is to reduce the lateral extension length before breakage of the conductor, not only at their exact locations, but for the conductor as a whole.

According to further embodiments an electric fence is provided, wherein the support member comprises an elongate slit in which the conductor is arranged and partly cased. By arranging the conductor in this manner, a secure fastening which can be achieved in connection to the forming of the support member is provided. By being only partly cased in the slit, the conductor is well exposed to the confined animals, and can also be replaced in case of breakage. The electric fence according to these two embodiments of the invention neither exhibit metal strands that are load-bearing nor fully integrated in the supporting structure, which implies that they are well exposed also to the force of a colliding animal. A conductor with a circular cross-section is is preferably surrounded by a support member material at more than 180° in order to be kept in place.

According to another embodiment of the invention in subclaim 7 the elongate support member comprises a polymer material. The material is preferably polyethylene (PEHD), but may also be any other suitable material comprising other polymers.

Unlike most of the prior art, the electric fence according to an embodiment of the invention does not exhibit a woven net structure or a rope with a twisted metal wire inside but is on the contrary made in one piece. Such a woven design does not offer much safety to the confined animals, since there is a multitude of thin and durable threads, both metal strands and polymer strings, that together or separately constitute a danger. A one piece structure avoids these drawbacks.

According to another embodiment an electric fence is provided wherein the elongate support member is provided with through holes for reducing material strains caused by weather conditions and mounting holes for attaching the support member to a post. Being an outdoor product exposed to harsh weather conditions such as wind, rain, and snowfall, regularly distributed through holes helps reducing unnecessary material strains in the electric fence.

According to another embodiment of the invention the elongate support member is provided with a bend so that the mounting holes are arranged in a first plane and that the conductor is arranged in a second plane that is parallelly displaced from the first plane. In this way is the conductor kept at a distance from the posts thereby being more exposed to the animals and less exposed to possible weed that may grow under the fence, risking to form sparks when in contact with the conductor.

According to an embodiment of the invention the conductor is chosen from the group consisting of conductors with circular, triangular and quadrangular cross-sections. Depending on the manufacturing method and replaceability of the conductor, cross-sections with different shapes can be used.

For increased exposition to animals, two or more separately arranged conductors can be used. Thus, according to another embodiment of the invention the electric fence comprises a further elongate conductor, the two conductors having the same distinctive features and being insulated from each other so that there is no formation of sparks between the two elongate conductors (4; 12) at use of the electric fence. In order to avoid spark formation, the conductors should be arranged at a distance and well insulated from each other.

One purpose of having two or more conductors is that the two conductors at use are oppositely charged such that when a conductive object comes into simultaneous contact with the two conductors an electric circuit is completed and an electric current is applied to the conductive object.

Another embodiment of the invention exhibits an electric fence wherein the elongate support member comprises two differently coloured member parts, whereby one member part constitutes the front side of the support member and the other member part constitutes the back side of the support member. Such a design allows for a fence with a white outside that is appealing to people and a green or brown inside that is highly visible to horses and other animals.

Comparing the electric fence according to an embodiment of the invention with the rigid structures described in the prior art, the electric fence has the advantage to be rollable on a coil, improving handling during transportation and mounting. This bendability also implies that the electric fence freely may be mounted to form a confinement lacking abrupt corners so that horses do not feel trapped or a confinement having an irregular shape following an irregular landscape. The roll- and bendability does not necessarily imply that the electric fence strive to have a bended form, if the support member is made in polyethylene and has been straightly extruded and afterwards cooled it strives to maintain a straight form.

According to another embodiment the elongate support member is provided with printed text on at least one side, thus this side has a printable surface. There are legislation stating the necessity to at regular interwalls along the electric fence extension warn for the electricity. For the prior art that does not allow printing on the fence itself this has to be done with regularly distributed signs. There is also a desire for farmers to expose the name of the farm.

It is further possible to arrange an alarm system, connected to the conductor for immediate signaling in case an animal breaks the fence and the current is interrupted. This signal can for example be sent as a text message (SMS) using mobile cellular technology.

Also a method of providing an electric fence is included in the invention. By forming an elongate support member in one piece, attaching at least one conductor to the elongate support member, and rolling up the elongate support member and the conductor on a coil an electric fence is achieved.

The invention is applicable to many kinds of animals, such as of horses, cattle, sheep and animals at zoological gardens, and for many kinds of confinement, such as paddocks, enclosed pastureland and enclosed fields.

### Brief description of the drawings

The invention will now be described in more detail with reference to the accompanying schematic drawings which show preferred embodiments of the invention and in which:
Fig. 1 is a perspective view of two posts and a power supply unit mounted to an electric fence according to an embodiment of the invention;
Fig. 2 is a perspective view of two posts mounted to an electric fence according to an embodiment of the invention subject to the force of for example an animal;
Fig. 3 is a perspective view of an electric fence according to an embodiment of the invention;
Fig. 4 is a perspective view of an electric fence with two member parts according to an embodiment of the invention;
Fig. 5 is a cross sectional view of an electric fence with two conductors with circular cross-section according to an embodiment of the invention;
Fig. 6 is a cross sectional view of an electric fence with one conductor with a triangular cross-section and another conductor with a quandrangular cross-section according to an embodiment of the invention.

### Description of preferred embodiments

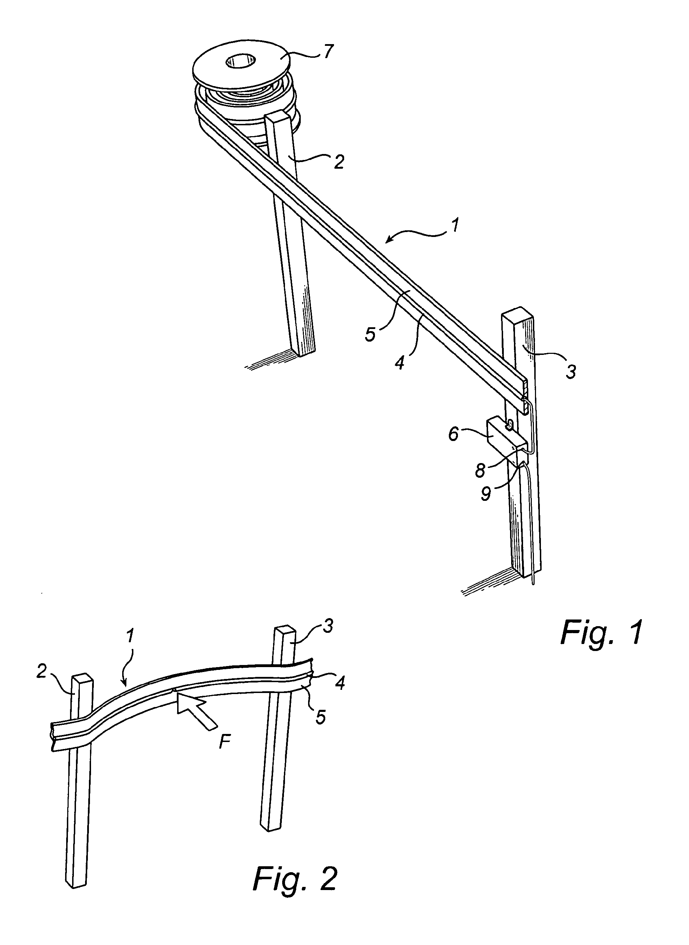

With initial reference to fig. 1, there is shown an electric fence 1 according to an embodiment of the present invention. The electric fence 1 is mounted to two posts 2 and 3. The electric fence 1 comprises a conductor 4 attached to an elongate support member 5. There is a power supply unit 6 connected to the conductor 4 and to the earth. In the illustrated, non-limitating example, is also a coil 7 for transportation of the electric fence visible, indicating that the electric fence 1 is being installed. The positive pole 8 of the power supply unit 6 is connected to the conductor 4 of the electric fence 1 and the negative pole 9 is earthed. The elongate support member 5 is made in one piece and is provided with mounting holes 10 and 11 for attaching the elongate support member 5 to a post 2 and 3. In a preferred embodiment, the elongate support member 5 is made of an extruded polyethylene (PEHD) board, while the conductor 4 is made of an aluminum alloy. Notice that PEHD is a fully recyclable material.

With additional reference, now to fig. 2, there is shown an electric fence 1 according to an embodiment of the invention, mounted with two posts 2 and 3. The arrow F indicates how the electric fence 1 is subject to a heavy load, for example caused by a collision with an animal, and the following bending of the electric fence
1. The elongate support member 5 has a higher flexural strength than the conductor 4, which implies that the conductor 4 breaks at a smaller applied lateral load than the support member 5. In fig. 2, the force F is of such magnitude that the conductor 4 breaks and the elongate support member 5 withstands the load. In a preferred embodiment of the invention, the lateral extension length before breakage for the elongate support member 5 is more than twice the size of the lateral extension length before breakage for the conductor 4. Following the breakage of the conductor 4, the animal can not get trapped in an electrified wire, risking to cause great injury.

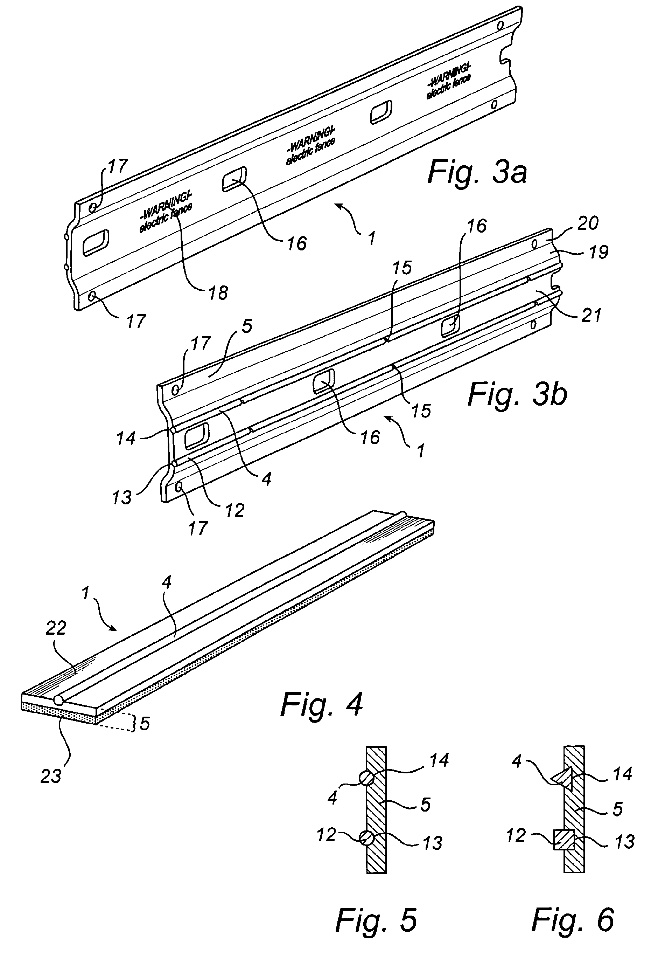

Fig. 3 shows another embodiment of the invention having two conductors 4 and 12, each partly cased in an elongate slit 13 and 14 of the elongate support member 5. The connection of a power supply unit 6 to this electric fence 1 can be performed in two ways; either the positive pole 8 of the power supply unit 6 is connected to both conductors 4 and 12 and the negative pole 9 earthed, or the positive pole 8 is connected to one conductor 4 and the negative pole 9 connected to the other conductor 12. These connection alternatives are not shown in fig. 3. The two conductors 4 and 12 have the same distinctive features and are insulated from each other, so that there is no formation of sparks between them. Further are the conductors 4 and 12 provided with regularly distributed indications of fracture 15. In another embodiment of the invention are weakened portions used instead of indications of fracture 15. Also illustrated in fig. 3, this preferred embodiment comprises through holes 16 for reducing material strains caused by weather conditions and mounting holes 17 for mounting the electric fence 1 to posts 2 and 3. In this preferred embodiment of the invention, the elongate support member 5 is provided with a bend 19, so that the mounting holes 17 are arranged in one plane 20 and the conductors are arranged in another plane 21 that is parallelly displaced from the first plane 20. This implies that the part of the elongate support member 5 where the conductors 4 and 12 are arranged can be kept at a distance from the part of the support member 5 fastened to the posts 2 and 3. In this way the conductors 4 and 12 have a maximum exposure to the animals, and are at the same time kept at a distance from weed that often grow under the fence 1 and that can cause spark formation.

With reference to fig. 4, the elongate support member 5 comprises two differently coloured member parts 22 and 23, whereby one member part 22 constitutes the front side of the elongate support member 5 and the other member part 23 constitutes the back side 23 of the support member 5. It has been shown that horses recognize objects in green and brown better than objects in white, orange or other colours. By providing an elongate support member 5 comprising two differently coloured member parts 22 and 23, for example in green and white, an electric fence 1 having both high visibility to horses and an attractive appearance to people is achieved. It is also provided with informative text 18 printed on the elongate support member. The printing of text 18 directly on the electric fence 1 implies an important advantage of the present invention. In Sweden, there are regulations for the use of electric fences stating the necessity to inform and warn about the electric fence each 100 meter along its extension. There is also a demand for the owner of the electric fence to display the name of the farm or the breeding estate.

A cross-section of the electric fence 1 in fig. 3 is shown in fig. 5. The conductors 4 and 12 have a circular cross-section and are partly cased in one slit 13 and 14 each in the elongate support member 5.

Turning to fig. 6, a cross-section of another embodiment of the invention shows that the conductors 4 and 12 can have both a triangular and a quadrangular cross-section. Fig. 6 does only show one possible combination; the cross-sections may as well be of the same type.

Briefly, the method for manufacturing according to a preferred embodiment of the invention is carried out as follows.

An elongate support member 5 is formed in one piece and provided with mounting holes 17. The elongate support member 5 is given a bend 19, so that the mounting holes 17 are arranged in a first plane 20 and that the place intended for conductors 4 and 12 is arranged in a second plane 21 that is parallelly displaced from the first plane 20. Two conductors 4 and 12 are attached to the elongate support member 5 and the elongate support structure is, either by means of material choice or by means of material treatment, provided with a lateral extension length before breakage more than twice the size of the lateral extension length before breakage of the conductors 4 and 12. The conductors 4 and 12 are provided with indications of fracture 15 and finally the electric fence is 1 rolled up on a coil 7.

Finally it should be pointed out that the inventive concept is by no means restricted to the embodiments described herein, but several modifications are feasible within the scope of the appended claims, such as for example using a cupper alloy in the conductors 4 and 12 and another suitable polymer in the elongate support member 5.

## Claims

1. An electric fence (1) comprising
at least one elongate support member (5) comprising an electrically non-conductive material and
at least one elongate conductor (4) supported by said support member (5),
**characterized in that** said support member (5) has higher flexural strength than said conductor (4).

2. An electric fence (1) as claimed in claim 1, wherein said support member (5) has a lateral extension length before breakage more than twice the size of the lateral extension length before breakage of the conductor (4).

3. An electric fence (1) as claimed in claim 1, wherein said conductor (4) is provided with weakened portions.

4. An electric fence (1) as claimed in any of the claims 1-3, wherein said conductor (4) is provided with indications of fracture (15).

5. An electric fence (1) as claimed in any of the claims above, wherein said elongate support member (5) comprises an elongate slit (14) in which said conductor (4) is arranged.

6. An electric fence (1) as claimed in claim 5, wherein said conductor (4) is partly cased in said slit (14).

7. An electric fence (1) as claimed in any of the claims above, wherein said elongate support member (5) comprises a polymer material.

8. An electric fence (1) as claimed in any of the claims above, wherein said elongate support member (5) is made in one piece.

9. An electric fence (1) as claimed in any of the claims above, wherein said elongate support member (5) is provided with through holes (16) for reducing material strains that may be caused by weather conditions.

10. An electric fence (1) as claimed in any of the claims above, wherein said elongate support member (5) is provided with mounting holes (17) for attaching the elongate support member (5) to a post (2 and 3).

11. An electric fence (1) as claimed in claim 10, wherein said elongate support member (5) is provided with a bend (19) so that said mounting holes (17) are arranged in a first plane (20) and that said conductor (4) is arranged in a second plane (21) that is parallelly displaced from said first plane (20).

12. An electric fence (1) as claimed in any of the claims above, wherein said conductor (4) is chosen from the group consisting of conductors with circular, triangular and quadrangular cross-sections.

13. An electric fence (1) as claimed in any of the claims above, wherein said electric fence (1) comprises a further elongate conductor (12), the two conductors (4; 12) having the same distinctive features and being insulated from each other so that there is no formation of sparks between the two elongate conductors (4; 12) at use of the electric fence (1).

14. An electric fence (1) as claimed in the claims 13-14, wherein said two conductors (4; 12) at use are oppositely charged such that when an conductive object comes into simultaneous contact with said two conductors (4; 12) an electric circuit is completed and an electric current is applied to the conductive object.

15. An electric fence (1) as claimed in any of the claims above, wherein said elongate support member (5) comprises two differently coloured member parts (22; 23), whereby one member (22) part constitutes the front side of the support member (5) and the other member part (23) constitutes the back side of the support member (5).

16. An electric fence (1) as claimed in any of the claims above, wherein said electric fence (1) is rollable on a coil (7).

17. An electric fence (1) as claimed in any of the claims above, wherein said elongate support member (5) on at least one side is provided with printed text (18).

18. Method of providing an electric fence (1),
**characterized by**
forming an elongate support member (5) in one piece;
attaching at least one conductor (4) to said elongate support member (5), and
rolling up said elongate support member (5) and said conductor (4) on a coil (7).

19. Method of providing an electric fence (1) as claimed in claim 18, further comprising
providing said elongate support member (5) with a higher flexural strength than said conductor (4).

20. Method of providing an electric fence (1) as claimed in any of the claims 18-19, further comprising
providing said elongate support member (5) with a lateral extension length before breakage more than twice the size of the lateral extension length before breakage of the conductor (4).

21. Method of providing an electric fence (1) as claimed in any of the claims 18-20, further comprising providing said conductor (4) with weakened portions.

22. Method of providing an electric fence (1) as claimed in any of the claims 18-21, further comprising providing said conductor (4) with indications of fracture (15).

23. Method of providing an electric fence (1) as claimed in any of the claims 18-20, further comprising
providing the elongate support member (5) with mounting holes (17) for attaching the elongate support member (5) to a post (2; 3), and
providing said elongate support member (5) with a bend (19) so that said mounting holes (17) are arranged in a first plane (20) and that said conductor (4) is arranged in a second plane (21) that is parallelly displaced from said first plane (20).
